# EUROPEAN PATENT APPLICATION

(11) **EP 1 104 898 A2**
(43) Date of publication of application: **06.06.2001**
(21) Application number: 00309783.9
(22) Date of filing: 03.11.2000
(51) Int. Cl.: G06F 9/455

(54) **Data processor for computer system**

(30) Priority: 04.11.1999 JP 31402999
(71) Applicant: VICTOR COMPANY OF JAPAN, LIMITED, Yokohama-Shi Kanagawa-Ken 221 (JP)
(72) Inventor: Yamamoto, Shigehiro, Yokosuka-shi, Kanagawa-ken (JP)
(74) Representative: Crawford, Andrew Birkby

(57) **Abstract**

Intermediate-code programs divided into program units are shared by sub-systems provided on a main system. Program units are downloaded and converted into native codes via any one of the sub-systems. The native codes are stored on memory. At least identification data for the stored native codes are registered on memory. The identification data are checked in response to a request for downloading a program unit by any sub-system except the subsystem via which the program units have been downloaded and converted into the native codes. A native code corresponding to the program unit is read from the memory instead of downloading if identification data for the program unit is found.

## Description

### BACKGROUND OF THE INVENTION

The present invention relates to a data processor for a computer system having several sub-systems that convert intermediate-code programs downloaded for each specific unit of program into native codes and store them on memory.

Each sub-system of a computer system for converting intermediate-code programs downloaded for each specific unit of program into native codes is provided with a table used for managing the intermediate-code programs already converted into the native codes and stored on memory.

Such a table prevents the same intermediate-code programs from being downloaded and converted again, for achieving a high running speed.

However, this table cannot be shared by the sub- systems concurrently running on the computer system, for sharing intermediate-code programs already converted into native codes and stored on memory.

Several virtual machines concurrently run on a computer system when several Java (registered trademark) application programs are executed. Execution of several browsers initiates a virtual machine to run on each browser. Such an independent virtual machine provided on each browser corresponds to the sub-system described above.

The Elate (registered trademark)-operating system (OS) is a host to execute several Elate-environments. This is like execution of several DOS-prompts on a Window-system.

The Elate-OS is a system executing virtual-processing to convert virtual-processing codes into codes native to CPUs on a machine. Programs for Elate-OS are divided for each small unit of program called a tool. Converted tools are stored on memory and shared by several CPUs.

Each Elate-environment, however, independently runs on one machine, so that codes already converted and stored on memory for one Elate-OS cannot be used by other Elate-OSs installed in the same machine.

The other Elate-OSs, or the sub-systems described above, therefore, have to convert intermediate-code programs into their own native codes, even though those codes are already available for one sub-system.

### SUMMARY OF THE INVENTION

A purpose of the present invention is to provide an apparatus and a method of sharing program units already downloaded and converted into native codes for achieving a high operating running speed and effective usage of memory.

The present invention provides a computer system including: a plurality of sub-systems to download intermediate-code programs for each program unit and convert the intermediate-code programs into native codes for each sub-system; a memory to store the native codes; and a manager to store at least identification data for the native codes stored in the memory, the native codes stored in the memory being shared by the plurality of sub-systems according to the identification data.

Moreover, the present invention provides a method of sharing intermediate-code programs divided into program units for sub-systems provided on a main system. The program units are downloaded and converted into native codes via any one of the sub-systems. The native codes are stored on memory. At least identification data for the stored native codes are registered on memory. The identification data are checked in response to a request for downloading a program unit by any sub-system except the subsystem via which the program units have been downloaded and converted into the native codes. A native code corresponding to the program unit is read from the memory instead of downloading if identification data for the program unit is found.

### BRIEF DESCRIPTION OF DRAWINGS

FIG. 1 shows a block diagram of a computer system including a data processor as a preferred embodiment according to the present invention; and
FIG. 2 is a flowchart explaining an operation of the computer system shown in FIG. 1.

### DETAILED DESCRIPTION OF PREFERRED EMBODIMENTS

Preferred embodiments according to the present invention will be disclosed with reference to the attached drawings.

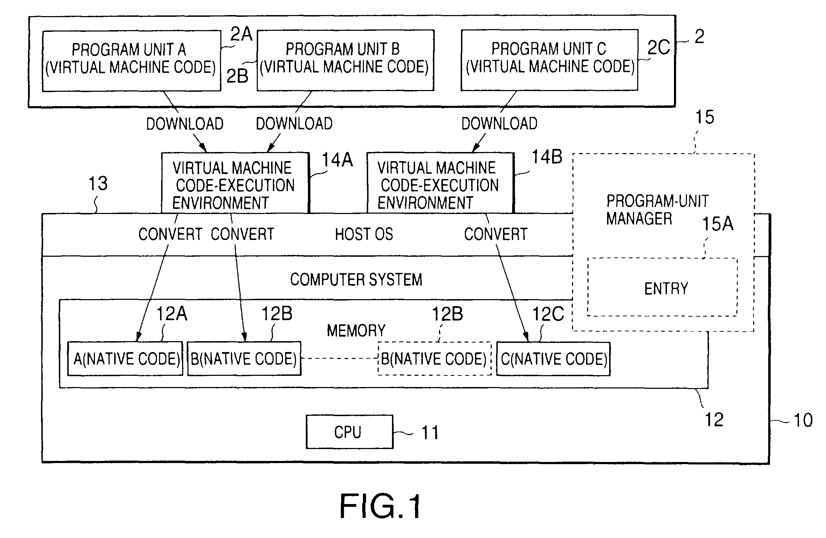

Shown in FIG. 1 is a block diagram of a computer system including a data processor as a preferred embodiment according to the present invention.

A computer system 10 is a one main system provided with a CPU 11, a memory 12 and a host-operating system (OS) 13. Provided on the main computer system 10 are virtual machine code-execution environments (sub-systems) 14A and 14B (only two environments shown for brevity).

An external server 2 has installed program-units 2A, 2B and 2C of virtual machine codes (intermediate codes).

A computer system 10 has also installed a program-unit manager 15 for both virtual machine code-execution environments 14A and 14B. The manager 15 stores, on an entry 15A, identification data (ID) for the program-units 2A, 2B and 2C that have been downloaded from the external server 2 and converted into native codes, and their addresses on the memory 12.

The program-unit ID preferably includes an ID code, a program-unit name and its size.

The program-unit manager 15 uses program-unit IDs and memory addresses for total management of the program-units that have been converted into native codes and stored on the memory 12.

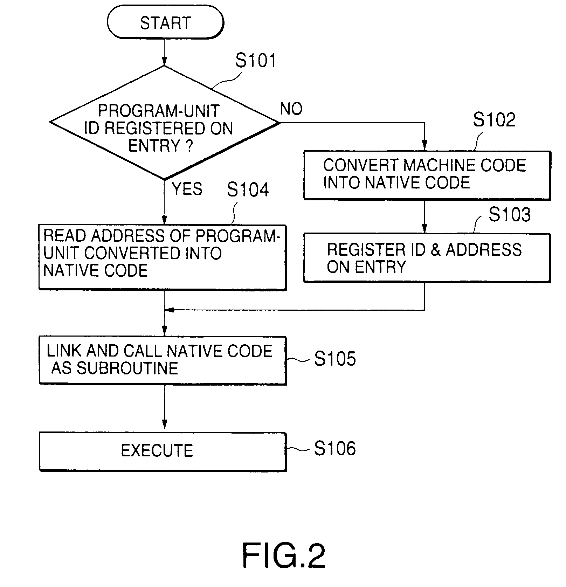

An operation of the data processor (FIG. 1) is disclosed with reference to a flowchart shown in FIG. 2.

The flowchart explains an operation where the machine code-execution environments 14A has already downloaded the program-units 2A and 2B, converted them into native codes 12A and 12B and stored them on the memory 12, on the other hand, the machine code-execution environment 14B is now trying to download the program-units 2B and 2C, as illustrated in FIG. 1.

In response to an environment 14B's request for downloading the program-units 2B and 2C, the program-unit manager 15 judges as to whether IDs for the program-units 2B and 2C have been registered on the entry 15A (STEP S101).

If there is no registered IDs, the machine code-execution environment 14B downloads the program-units 2B and 2C of virtual machine codes and converts them into native codes, and store them (native codes 12B and 12C) on the memory 12 (STEP S102).

The IDs and memory addresses for the native codes 12B and 12C are registered on the entry 15A of the program-unit manager 15 (STEP S103). The native codes 12B and 12C are linked and called as subroutines (STEP S105) for execution (STEP S106).

However, since the program-unit 2B has already been stored on the memory 12 as the native code 12B via the virtual machine code environment 14A, the program-unit manager 15 finds the ID for the program-unit 2B in the entry 15A (STEP S101). The process goes to STEP S102 only for the program-unit 2C.

The memory address of the native code 12B is then read from the entry 15A (STEP S104). The native code
12B is linked and called as a subroutine (STEP S105) for execution (STEP S106).

In STEP S105, when the computer system 10 is a system in which a program code (native code) that has been stored in a memory area of either the virtual machine code-execution environment 14A or 14B can be dynamically linked by the other environment, the ID and address for the native code and registered on the entry 15A of the program-unit manager 15 are linked according to a well known technique to call the program code.

On the other hand, when the computer system 10 is not such a system, a native code for which the ID and address have been registered on the entry 15A is copied in a memory area of the other the virtual machine code-execution environment for linking.

Moreover, a virtual machine code-execution environment that will utilize a program code for which the ID and address have been registered on the entry 15A may modify a part of management data for linking, and further copy the modified management data in a memory area of the environment for linking.

As disclosed, the data processor for a computer system according to the present invention compares program-units requested by an application program running on the computer system with management data, such as, ID and memory addresses. A program-unit is downloaded if there no ID, on the other hand, if there is an ID for the program-unit, a native code corresponding to the program-unit and already stored on memory is used.

Therefore, the present invention avoids unnecessary downloading and program-code conversion, to achieve high-speed processing and also effective memory usage.

## Claims

1. A computer system comprising:
a plurality of sub-systems to download intermediate-code programs for each program unit and convert the intermediate-code programs into native codes for each sub-system;
a memory to store the native codes; and
a manager to store at least identification data for the native codes stored in the memory, the native codes stored in the memory being shared by the plurality of sub-systems according to the identification data.

2. The computer system according to claim 1, wherein in response to a request for downloading one of the intermediate-code programs by any sub-system, the manager looks for the identification data for a native code among the stored native codes that have been converted from the intermediate-code programs, if the identification data is located, the native code is read out from the memory instead of downloading.

3. A method of sharing intermediate-code programs divided into program units for sub-systems provided on a main system comprising the steps of:
downloading the program units and converting the program units into native codes via any one of the sub-systems; storing the native codes on memory;
registering at least identification data for the stored native codes on memory;
checking the identification data in response to a request for downloading a program unit by any sub-system except the subsystem via which the program units have been downloaded and converted into the native codes; and
reading a native code corresponding to the program unit from the memory instead of downloading if identification data for the program unit is found.
